# EUROPÄISCHE PATENTSCHRIFT

(11) **EP 3 383 827 B1**
(45) Veröffentlichungstag und Bekanntmachung des Hinweises auf die Patenterteilung: **12.02.2020**
(21) Anmeldenummer: 15805137.5
(22) Anmeldetag: 01.12.2015
(51) Int. Cl.: C04B 35/482, C04B 35/56, C04B 35/58, C04B 35/632, C04B 35/638, C04B 35/64, C04B 35/645, C04B 35/65

(54) **KORN ZUR HERSTELLUNG EINES FEUERFESTEN ERZEUGNISSES, VERWENDUNG SOLCHER KÖRNER, FEUERFESTES ERZEUGNIS, VERFAHREN ZUR HERSTELLUNG EINES FEUERFESTEN ERZEUGNISSES SOWIE EIN DANACH HERGESTELLTES ERZEUGNIS**
GRAIN FOR PRODUCING A REFRACTORY PRODUCT, USE OF SUCH GRAINS, REFRACTORY PRODUCT, METHOD FOR PRODUCING A REFRACTORY PRODUCT AND A PRODUCT PRODUCED THEREBY.
GRAIN POUR PRODUIRE UN PRODUIT RÉFRACTAIRE, UTILISATION DE TELS GRAINS, PRODUIT RÉFRACTAIRE, PROCÉDÉ DE FABRICATION D'UN PRODUIT RÉFRACTAIRE ET UN PRODUIT FABRIQUÉ AINSI.

(43) Veröffentlichungstag der Anmeldung: 10.10.2018
(73) Patentinhaber: Refractory Intellectual Property GmbH & Co. KG, 1100 Wien (AT)
(72) Erfinder: BAUER, Christoph, 8047 Graz (AT); FREIBERGER, Norbert, 8054 Graz (AT)
(74) Vertreter: Berkenbrink, Kai-Oliver
(86) Internationale Anmeldenummer: PCT/EP2015/078198
(87) Internationale Veröffentlichungsnummer: WO 2017/092794

(56) Entgegenhaltungen:
- EP-A1- 2 218 503
- JP-A- 2011 148 014
- V.G. GREBENKINA AND M.I. LESNAYA: "Electro- and Thermophysical Properties of Alloys of the ZrC-ZrN System", SOVIET POWDER METALLURGY AND METAL CERAMICS, Bd. 16, Nr. 6, 1. Juni 1977 (1977-06-01), Seiten 448-451, XP002753107,

## Beschreibung

Die Erfindung betrifft die Verwendung eines Zirkoniumcarbonitrid umfassenden Korns, ein feuerfestes Erzeugnis, ein Verfahren zur Herstellung eines feuerfesten Erzeugnisses sowie ein danach hergestelltes feuerfestes Erzeugnis.

Der Begriff "feuerfestes Erzeugnis" im Sinne der Erfindung bezeichnet insbesondere feuerfeste keramische Erzeugnisse, insbesondere mit einer Einsatztemperatur von über 600° C und bevorzugt feuerfeste Werkstoffe gemäß DIN 51060:2000-6, also Werkstoffe mit einem Kegelfallpunkt > SK 17. Die Ermittlung des Kegelfallpunktes kann insbesondere gemäß DIN EN 993-12:1997-06 erfolgen.

Feuerfeste Erzeugnisse basieren regelmäßig auf wenigstens einem der Oxide Al₂O₃, MgO, Cr₂O₃, SiO₂, CaO oder ZrO₂.

Soweit feuerfeste Erzeugnisse mit einer hohen Korrosionsbeständigkeit beziehungsweise Verschleißfestigkeit zur Verfügung gestellt werden sollen, umfassen diese Erzeugnisse regelmäßig einen Anteil ZrO₂ (Zirkoniumdioxid) auf. Insoweit ist ein bevorzugtes Einsatzgebiet von ZrO₂ umfassenden feuerfesten Erzeugnissen beispielsweise der Stahlstrangguss, bei dem ZrO₂ umfassende feuerfeste Erzeugnisse beispielsweise als Schieberplatten, Monoblockstopfen, Tauchrohre oder Eintauchausgüsse eingesetzt werden. In der Regel ist dabei nicht das gesamte feuerfeste Erzeugnis auf Basis ZrO₂ ausgebildet, sondern allein die Bereiche, die besonders korrosionsbeziehungsweise verschleißfest ausgebildet sein müssen. Insbesondere kann es sich bei diesen Bereichen um solche Bereiche der feuerfesten Erzeugnisse handeln, die beim Einsatz im Bereich der Schlacke angeordnet sind oder an denen die Stahlschmelze eine verhältnismäßig hohe Strömungsgeschwindigkeit aufweist.

Grundsätzlich hat sich ZrO₂ als korrosionsbeständiger Werkstoff in solch feuerfesten Erzeugnissen bewährt. Bei der Verwendung von ZrO₂ in einem feuerfesten Werkstoff ist jedoch stets der bekannte Umstand zu berücksichtigen, dass ZrO₂ in drei Modifikationen auftritt. So liegt reines ZrO₂ bei Raumtemperatur und bis zu einer Temperatur von etwa 1.173° C in einer monoklinen Tieftemperaturphase vor, die sich oberhalb dieser Temperatur in die tetragonale beziehungsweise kubische Hochtemperaturphase umwandelt. Oberhalb einer Temperatur von etwa 2.370° C liegt ZrO₂ allein in kubischer Modifikation vor. Diese Phasenumwandlungen sind reversibel, wobei die Rückumwandlung in die monokline Tieftemperaturmodifikation zu tieferen Temperaturen hin verschoben ist und erst etwa ab 920°C eintritt.

Da die monokline Tieftemperaturphase des ZrO₂ ein etwa 5 Vol.-% größeres Volumen aufweist als die tetragonale und kubische Hochtemperaturphase, kommt es beim Über- beziehungsweise Unterschreiten der Umwandlungstemperatur von der monoklinen Tieftemperaturphase in die tetragonale beziehungsweise kubische Hochtemperaturphase jeweils zu einer entsprechenden Kontraktion beziehungsweise Ausdehnung des ZrO₂. Aufgrund dieser Volumensänderung würde es in einem reines ZrO₂ aufweisenden feuerfesten Erzeugnisses zu einer Rissbildung im Erzeugnis kommen.

Um diesen Volumensprung des ZrO₂ bei Unterschreiten der Umwandlungstemperatur zu vermeiden, ist es bekannt, die Hochtemperaturmodifikation durch Zusätze von bestimmten Oxiden zu stabilisieren, so dass die Hochtemperaturmodifikation auch bei Raumtemperatur metastabil erhalten bleibt. Als entsprechend stabilisierende Oxide sind beispielsweise MgO, CaO, Y₂O₃ oder Oxide seltener Erden bekannt. Beispielsweise kann durch einen Zusatz zu ZrO₂ von wenigstens 16 Mol-% CaO, wenigstens 16 Mol-% MgO oder wenigstens 8 Mol-% Y₂O₃ die kubische Modifikation bis zur Raumtemperatur metastabil erhalten bleiben. Solch vollständig stabilisiertes ZrO₂ wird auch als vollstabilisiertes ZrO₂ (FSZ, "Fully Stabilized Zirconia") bezeichnet. Soweit ZrO₂ durch Zusätze stabilisierender Oxide nur in solchen Anteilen stabilisiert ist, dass die kubische Modifikation nur teilweise bis zur Raumtemperatur metastabil erhalten bleibt, wird auch von teilstabilisiertem ZrO₂ gesprochen (PSZ, "Partly Stabilized Zirconia").

Vollstabilisiertes ZrO₂ weist eine lineare Wärmeausdehnung auf, während teilstabilisiertes ZrO₂ je nach Abhängigkeit von noch monoklinen Anteilen des ZrO₂ nur einen mehr oder weniger stark ausgeprägten Volumensprung bei Über- beziehungsweise Unterschreiten der Umwandlungstemperatur aufweist. Entsprechend voll- oder teilstabilisiertes ZrO₂ eignet sich daher als Werkstoff für feuerfeste Erzeugnisse.

Nachteilig an voll- oder teilstabilisiertem ZrO₂ gegenüber reinem ZrO₂ ist jedoch, dass die Korrosionsbeständigkeit sowie die chemische Beständigkeit von voll- oder teilstabilisiertem ZrO₂ gegenüber reinem ZrO₂ vermindert ist. Dies liegt insbesondere daran, dass die stabilisierenden Zusätze mit Stoffen, mit denen das feuerfeste Erzeugnis bei seinem Einsatz in Kontakt tritt, niedrig schmelzende Phasen bilden, die aus dem Erzeugnis gelöst werden. Bei solchen Stoffen kann es sich insbesondere um Bestandteile der Stahlschmelze oder der Schlacke handeln, die mit stabilisierenden Zusätzen in Form von CaO, MgO oder Y₂O₃ niedrig schmelzende Phasen bilden.

Die hervorragende Korrosionsbeständigkeit von ZrO₂ wird durch stabilisierende Zusätze insoweit reduziert.

Soweit feuerfeste Erzeugnisse mit einer hohen Korrosionsbeständigkeit beziehungsweise Verschleißfestigkeit zur Verfügung gestellt werden sollen, umfassen diese Erzeugnisse regelmäßig einen Anteil ZrO₂ (Zirkoniumdioxid) auf.

Der Erfindung liegt die Aufgabe zugrunde, die Verwendung eines alternativen Stoffes beziehungsweise Rohstoffes zu ZrO₂ für die Herstellung von feuerfesten Erzeugnissen mit einer hohen Korrosionsbeständigkeit beziehungsweise Verschleißfestigkeit zur Verfügung zu stellen. Insbesondere sollte dieser Stoff keine oder nur eine geringfügig ausgeprägte anormale Wärmedehnung beim Über- beziehungsweise Unterschreiten von einer Tieftemperaturphase in eine Hochtemperaturphasen aufweisen.

Eine weitere Aufgabe der Erfindung besteht darin, die Verwendung eines Stoffes beziehungsweise Rohstoffes für die Herstellung von feuerfesten Erzeugnissen mit einer hohen Korrosionsbeständigkeit beziehungsweise Verschleißfestigkeit zur Verfügung zu stellen, welcher gegenüber dem aus dem Stand der Technik bekannten voll- oder teilstabilisiertem ZrO₂ eine verbesserte Korrosionsbeständigkeit aufweist. Eine weitere Aufgabe der Erfindung besteht darin, ein Verfahren zur Herstellung eines solchen Stoffes zur Verfügung zu stellen. Eine weitere Aufgabe der Erfindung besteht darin, ein feuerfestes Erzeugnisses, welches einen solchen Stoff aufweist, zur Verfügung zu stellen. Eine weitere Aufgabe der Erfindung besteht darin, ein Verfahren zur Herstellung eines solchen feuerfesten Erzeugnisses sowie ein danach hergestelltes feuerfestes Erzeugnis zur Verfügung zu stellen.

Zur Lösung der erstgenannten Aufgabe wird erfindungsgemäß zur Verfügung gestellt die Verwendung eines Korns zur Herstellung eines feuerfesten Erzeugnisses, insbesondere eines feuerfesten keramischen Erzeugnisses, welches Zirkoniumcarbonitrid umfasst.

Die Erfindung beruht auf der überraschenden Erkenntnis, dass Zirkoniumcarbonitrid einen hervorragenden Stoff beziehungsweise Rohstoff für die Herstellung von feuerfesten Erzeugnissen darstellt, die eine hohe Korrosionsbeständigkeit beziehungsweise Verschleißfestigkeit aufweisen sollen.

Diese Erkenntnis ist umso überraschender vor dem Hintergrund des Umstandes, dass Zirkoniumcarbonitrid bislang für ganz andere Zwecke als für die Herstellung von feuerfesten Erzeugnissen verwendet wird. Vielmehr wird Zirkoniumcarbonitrid bislang zur Beschichtung von Werkzeugen für die Materialbearbeitung oder zur Gewinnung von Zirkonium(IV)-chlorid verwendet.

Erfindungsgemäß wird Zirkoniumcarbonitrid zur Herstellung eines feuerfesten keramischen Erzeugnisses nunmehr in Form eines Zirkoniumcarbonitrid umfassenden Kornes zur Verfügung gestellt.

Mit "Korn" wird erfindungsgemäß ein einzelnes beziehungsweise individualisierbares Partikel bezeichnet, also ein Körper, der sich vom umgebenden, insbesondere kontinuierlichen Medium durch eine Phasengrenzfläche unterscheidet. Dieses Partikel kann lose vorliegen, beispielsweise einzeln oder in einem Gemenge aus mehreren Körnern beziehungsweise Partikeln. Das Partikel kann auch in ein festes Medium eingebunden sein, beispielsweise in einen festen Körper, insbesondere beispielsweise in einen keramischen Körper. Ferner kann das Partikel beispielsweise in Form eines Kristallites vorliegen, welcher insbesondere in einem Gefüge, insbesondere beispielsweise auch in einem kristallinen Gefüge vorliegen kann.

Gegenstand der Erfindung ist ferner die Verwendung von erfindungsgemäßen Körnern als Rohstoff für die Herstellung von feuerfesten Erzeugnissen, insbesondere für die Herstellung von feuerfesten keramischen Erzeugnissen. Die Verwendung kann dabei, wie hierin beschieben, erfolgen.

Gegenstand der Erfindung ist ferner die Verwendung Zirkoniumcarbonitrid für die Herstellung von feuerfesten Erzeugnissen, insbesondere für die Herstellung von feuerfesten keramischen Erzeugnissen.

Gegenstand der Erfindung ist ferner die Verwendung eines Rohstoffes für die Herstellung von feuerfesten Erzeugnissen, insbesondere für die Herstellung von feuerfesten keramischen Erzeugnissen, welcher Körner umfasst oder aus Körnern besteht, die in den Ansprüchen 1 bis 8 beschrieben werden; Gegenstand der Erfindung ist ferner ein Versatz für die Herstellung von feuerfesten Erzeugnissen, insbesondere für die Herstellung von feuerfesten keramischen Erzeugnissen, welcher Körner umfasst, die in den Ansprüchen 1 bis 8 beschrieben werden.

Erfindungsgemäß hat sich herausgestellt, dass diese Körner ihre Wirkung, nämlich insbesondere die Korrosionsbeständigkeit beziehungsweise Verschleißfestigkeit eines feuerfesten Erzeugnisses zu verbessern, bereits entfalten können, wenn Zirkoniumcarbonitrid in geringen Anteilen in den Körnern vorliegt. Insofern kann vorgesehen sein, dass Zirkoniumcarbonitrid in dem Korn nur in einem Anteil von wenigstens 1 Masse-% vorliegt, bezogen auf die Gesamtmasse des Korns, also beispielsweise auch in einem Anteil von wenigstens 2, 3, 4, 5, 6, 8, 10, 12, 14, 16, 18, 20, 21, 22, 23, 24, 25, 26, 27, 28, 29, 30, 35, 40, 45, 50, 55, 60, 65, 70, 75, 80, 85, 90, 95 oder 98 Masse-%. Es kann jedoch auch vorgesehen sein, dass die Körner vollständig aus Zirkoniumcarbonitrid bestehen, dass die Körner Zirkoniumcarbonitrid also in einem Anteil von 100 Masse-% umfassen, bezogen auf die Gesamtmasse des Korns. Ferner kann vorgesehen sein, dass das Korn, jeweils bezogen auf die Gesamtmasse des Korns, Zirkoniumcarbonitrid in einem Anteil von höchstens 99 Masse-% aufweist, also beispielsweise auch in einem Anteil von höchstens 98, 97, 96, 95, 90, 85, 80, 75, 70, 65, 60, 55 oder 50 Masse-%. Nach einer bevorzugten Ausführungsform weist das Korn, jeweils bezogen auf die Gesamtmasse des Korns, Zirkoniumcarbonitrid in einem Anteil von höchstens 50 Masse-% auf, also beispielsweise auch von höchstens 48, 45, 40, 35, 30, 25, 20, 15, 10 oder 5 Masse-%. Insofern kann der Anteil an Zirkoniumcarbonitrid in dem Korn beispielsweise im Bereich von 1 bis 100 Masse-% liegen. Nach einer bevorzugten Ausführungsform liegt der Anteil an Zirkoniumcarbonitrid in dem Korn im Bereich von 1 bis 50 Masse-%.

Ein Korn kann beispielsweise eine mittlere Korngröße im Bereich von 1 bis 1.000 µm aufweisen, also beispielsweise auch eine mittlere Korngröße von wenigstens 1, 5, 10, 20, 50 oder 100 µm und beispielsweise auch ein mittlere Korngröße von höchstens 1.000, 500 oder 200 µm. Soweit ein Korn als loser Partikel vorliegt, kann die Größe des Korns gemäß DIN 66165-1:2015-10 bestimmt werden. Soweit ein Korn in Form eines fest in einen Körper eingebundenen Partikels vorliegt, insbesondere auch in Form eines Kristallites, kann die mittlere Korngröße des Korns nach dem Sehnenschnittverfahren gemäß ASTM E 112:2013 bestimmt werden.

Erfindungsgemäß hat sich herausgestellt, dass Körner, soweit diese in einem feuerfesten keramischen Erzeugnis vorliegen, nicht nur die Korrosionsbeständigkeit und Verschleißfestigkeit des Erzeugnisses verbessern können, sondern auch dessen Gefügeelastizität. Die Erfinder vermuten, dass diese Wirkung darauf beruht, dass Zirkoniumcarbonitrid als Elastifizierer in dem Erzeugnis wirkt, wenn Zirkoniumcarbonitrid erfindungsgemäß als Korn in dem Erzeugnis vorliegt. Als "Elastifizierer" werden in der Feuerfesttechnologie Stoffe bezeichnet, die einen anderen Wärmeausdehnungskoeffizienten aufweisen als die feuerfeste Hauptkomponente, so dass es beim keramischen Brand und dem anschließenden Abkühlen zu mechanischen Spannungen zwischen dem Elastifizierer und der Hauptkomponente kommt, die zu Mikrorissen im Gefügen führen. Im Falle eines mechanischen Angriffs auf das Erzeugnis können diese Mikrorisse einen Teil der Bruchenergie kompensieren, wodurch die Gefahr eines Sprödigkeitsbruches des Erzeugnisses verringert wird. Erfindungsgemäß hat sich nunmehr herausgestellt, dass die Körner als solche Elastifizierer wirken. Die Wirkung des erfindungsgemäßen Korns zur Verbesserung der Gefügeelastizität beziehungsweise zur Erhöhung des Bruchzähigkeit des feuerfesten Erzeugnisses ist dabei besonders effektiv, soweit das Korn in der vorbezeichneten mittleren Korngröße vorliegt.

Ferner hat sich erfindungsgemäß herausgestellt, dass die Korrosionsbeständigkeit eines Körner umfassenden, feuerfesten Erzeugnisses sehr nachhaltig verbessert werden kann, da sich die Körner im Gefüge eines feuerfesten Erzeugnisses als sehr stabil erweisen. Dies liegt aller Wahrscheinlichkeit nach an der Reaktionsträgheit der Körner, insbesondere der größeren Reaktionsträgheit im Vergleich zu in amorpher Form vorliegendem Zirkoniumcarbonitrid.

Neben Zirkoniumcarbonitrid (Zr(C,N)) können in dem Korn wenigstens einer der Stoffe Zirkoniumcarbid (ZrC) oder Zirkoniumnitrid (ZrN) vorliegen.

Das Korn kann neben Zirkoniumcarbonitrid insbesondere noch Anteile an Zirkoniumdioxid aufweisen. Überraschend hat sich im Rahmen der Erfindung herausgestellt, dass sich die vorteilhaften Wirkungen von Zirkoniumcarbonitrid und Zirkoniumdioxid, die diese hinsichtlich der Verbesserung des Korrosions- und Verschleißeigenschaften auf feuerfeste Erzeugnisse ausüben, in besonderer Weise synergistisch ergänzen, soweit Zirkoniumcarbonitrid und Zirkoniumdioxid nebeneinander in einem Korn vorliegen. So wurde überraschend festgestellt, dass Zirkoniumdioxid keine oder nur eine geringfügig ausgeprägte anormale Wärmedehnung beziehungsweise Kontraktion beim Über- beziehungsweise Unterschreiten der Umwandlungstemperatur von der Tieftemperaturphase in die Hochtemperaturphasen aufweist, wenn dieses neben Zirkoniumcarbonitrid in einem Korn vorliegt. Die Erfinder vermuten, dass das Ausdehnungsverhalten von Zirkoniumdioxid einerseits und Zirkoniumcarbonitrid andererseits bei Temperaturwechseln entgegenwirkt und sich daher in einem Korn, welches Zirkoniumdioxid und Zirkoniumcarbonitrid umfasst, zumindest teilweise gegenseitig kompensiert.

Erfindungsgemäß wird mit "Zirkoniumdioxid" das Oxid Zirkonium(IV)-Oxid, also ZrO₂ bezeichnet.

Nach einer Ausführungsform ist vorgesehen, dass das Korn einen Anteil an Zirkoniumdioxid von wenigstens 1 Masse-% aufweist, bezogen auf die Gesamtmasse des Korns, also beispielsweise auch einen Anteil von wenigstens 2, 3, 4, 5, 6, 8, 10, 12, 14, 16, 18, 20, 25, 30, 35, 40, 45. Nach einer bevorzugten Ausführungsform weist das Korn einen Anteil an Zirkoniumdioxid von wenigstens 50 Masse-% aufweist, bezogen auf die Gesamtmasse des Korns, also beispielsweise auch einen Anteil von wenigstens 55, 60, 65, 70, 75, 80, 85, 90 oder 95 Masse-%. Erfindungsgemäß hat sich herausgestellt, dass sich der zuvor beschriebene, vorteilhafte Effekt, den Zirkoniumcarbonitrid auf das Ausdehnungsverhalten von Zirkoniumdioxid ausübt, bereits einstellt, wenn Zirkoniumcarbonitrid in nur sehr geringen Anteilen neben Zirkoniumdioxid im erfindungsgemäßen Korn vorliegt; insbesondere kann sich dieser Effekt bereits einstellen, soweit Zirkoniumcarbonitrid nur in Anteilen von wenigstens 1 Masse-% neben Zirkoniumdioxid im Korn vorliegt. Insofern kann vorgesehen sein, dass das Korn Zirkoniumdioxid in einem Anteil von bis zu 99 Masse-% aufweist, also beispielsweise auch in einem Anteil von höchstens 98, 97, 96, 95, 90, 85, 80, 75, 70, 65, 60, 55, 45, 40, 35, 30, 25, 20, 15, 10 oder 5 Masse-%. Insofern kann der Anteil an Zirkoniumdioxid in dem Korn beispielsweise im Bereich von 1 bis 99 Masse-% liegen. Nach einer bevorzugten Ausführungsform kann der Anteil an Zirkoniumdioxid in dem Korn beispielsweise im Bereich von 1 bis 50 Masse-% liegen.

Bevorzugt liegt das Zirkoniumdioxid in dem Korn in kubischer Modifikation vor.

Erfindungsgemäß wurde festgestellt, dass die Wärmedehnung beziehungsweise Kontraktion des Korns beim Überbeziehungsweise Unterschreiten der Umwandlungstemperatur des Zirkoniumdioxids besonders gering ist, wenn das Massenverhältnis der Masse an Zirkoniumdioxid zur Masse an Zirkoniumcarbonitrid im Korn in einem bestimmten Bereich liegt, nämlich wenigstens 0,02 beträgt und höchstens 49 beträgt und insbesondere wenigstens 0,1 oder 0,5 oder 1,0 oder 1,2 oder 1,4 oder 1,6 oder 1,8 oder 2,0 oder 2,1 oder 2,2 oder 2,3 oder 2,4 beträgt sowie höchstens 45 oder 40 oder 35 oder 30 oder 25 oder 20 oder 15 oder 12 oder 10 oder 9 oder 8 oder 7 oder 6 oder 5,5 oder 5 oder 4,5 oder 4 oder 3,5 oder 3,2 oder 3,1 oder 3,0 oder 2,9 oder 2,8 oder 2,7 oder 2,6 oder 2,5 beträgt.

Die Verteilung von Zirkoniumdioxid und Zirkoniumcarbonitrid kann ungleichmäßig über das Volumen des Korns verteilt sein.

Nach einer besonders bevorzugten Ausführungsform ist vorgesehen, dass Zirkoniumcarbonitrid im Randbereich des Korns konzentriert ist. Bei dieser Ausführungsform ist demnach der Massenanteil an Zirkoniumcarbonitrid in weiter außen liegenden Bereichen des Korns, insbesondere im Randbereich des Korns, höher als in weiter innen liegenden Bereichen des Korns. Dabei ist der Massenanteil bezogen auf den jeweiligen Bereich des Korns.

Erfindungsgemäß wurde festgestellt, dass Zirkoniumcarbonitrid, soweit dieses im Randbereich des Korns konzentriert ist, die Wärmedehnung beziehungsweise Kontraktion von Zirkoniumdioxid, soweit diese neben Zirkoniumcarbonitrid im Korn vorliegt, besonders wirkungsvoll kompensieren beziehungsweise unterdrücken kann. Die Erfinder vermuten, dass die Wärmedehnung des Zirkoniumdioxids bei dieser Ausführungsform der Erfindung deshalb besonders wirkungsvoll unterdrückt wird, da das im Randbereich des Korns konzentrierte Zirkoniumcarbonitrid das im Inneren des Korns konzentrierte Zirkoniumdioxid wie eine Schale umgibt und einer über die Korngrenze hinweg nach außen wirkenden Kontraktion des Zirkoniumdioxids daher effektiv entgegenwirken kann.

Erfindungsgemäß wurde ferner festgestellt, dass Zirkoniumdioxid, soweit diese neben Zirkoniumcarbonitrid im Korn vorliegt, in dem Korn gegenüber dem aus dem Stand der Technik bekannten voll- oder teilstabilisiertem ZrO₂ bei gleichen Anteilen an stabilisierenden Oxiden eine verbesserte Korrosionsbeständigkeit aufweist. Insbesondere wurde festgestellt, dass Zirkoniumdioxid insoweit gegenüber dem aus dem Stand der Technik bekannten voll- oder teilstabilisiertem ZrO₂ bei gleichen Anteilen an stabilisierenden Oxiden in Form von MgO, CaO, Y₂O₃ oder Oxiden seltener Erden eine verbesserte Korrosionsbeständigkeit aufweist.

Denn erfindungsgemäß hat sich herausgestellt, dass Zirkoniumcarbonitrid einer Korrosion von Zirkoniumdioxid entgegenwirkt. Der Schutz des Zirkoniumdioxids vor Korrosion ist dabei besonders effektiv, soweit Zirkoniumcarbonitrid, wie vorstehend ausgeführt, im Randbereich des Korns konzentriert ist und das im Inneren des Korns höher konzentrierte Zirkoniumdioxid wie eine Schale schützend umgibt.

Es kann vorgesehen sein, dass das Korn die folgenden Elemente in den folgenden Massenanteilen umfasst, jeweils bezogen auf die Gesamtmasse des Korns, wobei die Elemente in diesen Massenanteilen jeweils einzeln oder in Kombination vorliegen können:
Zirkonium: 5 bis 97 Masse-%, also beispielsweise auch wenigstens 5, 10, 20, 30, 40, 50, 52, 54, 56, 58, 60, 62, 64, 65, 66, 67, 68 oder 69 Masse-% und beispielsweise auch höchstens 97, 96, 94, 92, 90, 88, 86, 84, 82, 80, 79, 78, 77, 76, 75, 74, 73, 72 oder 71 Masse-%;
Sauerstoff: 1 bis 50 Masse-%, also beispielsweise auch wenigstens 1, 2, 4, 6, 8, 10, 11, 12, 13, 14, 15, 16, 17, 18 oder 19 Masse-% und beispielsweise auch höchstens 50, 40, 30, 29, 28, 27, 26, 25, 24, 23, 22 oder 21 Masse-%;
Stickstoff: 1 bis 30 Masse-%, also beispielsweise auch wenigstens 1, 2, 3, 4, 5, 6 oder 7 Masse-% und beispielsweise auch höchstens 30, 20, 15, 14, 13, 12, 11 oder 10 Masse-%;
Kohlenstoff: 1 bis 30 Masse-%, also beispielsweise auch wenigstens 1, 2, 3, 4, 5, 6 oder 7 Masse-% und beispielsweise auch höchstens 30, 20, 15, 14, 13, 12, 11 oder 10 Masse-%;
Hafnium: 0 bis 4 Masse-%, also beispielsweise auch wenigstens 0,5 oder 1,0 oder 1,5 Masse-% und beispielsweise auch höchstens 4,0 oder 3,5 oder 3,0 oder 2,5 oder 2,0 Masse-%;
Calcium: 0 bis 8 Masse-%, also beispielsweise auch wenigstens 0,5 oder 1,0 Masse-% und beispielsweise auch höchstens 8, 7, 6, 5, 4, 3, 2, 1 oder 0,5 Masse-%;
Magnesium: 0 bis 8 Masse-%, also beispielsweise auch wenigstens 0,5 oder 1,0 Masse-% und beispielsweise auch höchstens 8, 7, 6, 5, 4, 3, 2, 1 oder 0,5 Masse-%;
Yttrium: 0 bis 8 Masse-%, also beispielsweise auch wenigstens 0,5 oder 1,0 Masse-% und beispielsweise auch höchstens 8, 7, 6, 5, 4, 3, 2, 1 oder 0,5 Masse-%;
Eisen: 0 bis 2 Masse-%, also beispielsweise auch wenigstens 0,1 Masse-% und beispielsweise auch höchstens 1,5 oder 0,8 oder 0,5 Masse-%;
Aluminium: 0 bis 2 Masse-%, also beispielsweise auch wenigstens 0,1 Masse-% und beispielsweise auch höchstens 1,5 oder 0,8 oder 0,5 Masse-%;
Silizium: 0 bis 2 Masse-%, also beispielsweise auch wenigstens 0,1 Masse-% und beispielsweise auch höchstens 1,5 oder 0,8 oder 0,5 Masse-%.

Erfindungsgemäß hat sich herausgestellt, dass das Korn sehr empfindlich auf weitere Elemente reagieren kann, die neben den vorbezeichneten Elementen, insbesondere in den vorbezeichneten Anteilen im Korn vorliegen. Insbesondere kann die Wärmedehnung des Korns wieder zunehmen, wenn neben den vorbezeichneten Elementen weitere Elemente im Korn vorliegen. Nach einer Ausführungsform der Erfindung ist daher vorgesehen, dass das Korn neben den vorbezeichneten Elementen Zirkonium, Sauerstoff, Stickstoff, Kohlenstoff, Hafnium, Calcium, Magnesium, Yttrium, Eisen und Aluminium weitere Elemente nur in einer Gesamtmasse von unter 10 Masse-% aufweist, bezogen auf die Gesamtmasse des Korn, insbesondere in einer Gesamtmasse unter 9, 8, 7, 6, 5, 4, 3, 2 oder auch unter 1 Masse-%.

Zur Herstellung des Korns kann zunächst von einem aus dem Stand der Technik bekannten Zirkoniumdioxid ausgegangen werden, das insbesondere in Kornform vorliegen kann, beispielsweise in Form eines Gemenges aus losen Körnern. Alternativ kann das Zirkoniumdioxid beispielsweise auch als Bestandteil eines festen Körpers vorliegen, beispielsweise in Form von Körnern oder Kristalliten aus Zirkoniumdioxid in einem keramischen Körper. Das als Ausgangsstoff zur Verfügung gestellte Zirkoniumdioxid gemäß dem Stand der Technik kann insbesondere auch in Form von teil- oder vollstabilisiertem Zirkoniumdioxid zur Verfügung gestellt werden. Das Korn kann nunmehr erhalten werden durch einen Brand von solchem Zirkoniumdioxid in reduzierender Atmosphäre unter Anwesenheit von Kohlenstoff und Stickstoff.

Nach dem Brand wird das Zirkoniumdioxid abgekühlt, insbesondere auf Raumtemperatur, wodurch man ein erfindungsgemäßes Korn erhält.

Die reduzierende Atmosphäre während des Brandes kann bevorzugt einen Sauerstoffpartialdruck unter 10⁻⁶ Pa aufweisen, also beispielsweise auch einen Sauerstoffpartialdruck unter 10⁻⁷ oder 10⁻⁸ Pa. Die reduzierende Atmosphäre kann, wie aus dem Stand der Technik bekannt, beispielsweise dadurch erzeugt werden, dass das als Ausgangsstoff zur Verfügung gestellte Zirkoniumdioxid in Anwesenheit eines Kohlenstoffträgers, beispielsweise in Form von Graphit, Ruß, Koks, Pech oder Kohle, gebrannt wird, bevorzugt in einem geschlossenen Ofenraum. Hierzu kann das teil- oder vollstabilsierte Zirkoniumdioxid beispielsweise auf ein Bett aus einem solchen Kohlenstoffträger gelegt oder mit einem solchen Kohlenstoffträger gemischt werden.

Soweit zur Erzeugung der reduzierenden Atmosphäre beim Brand, wie vorstehend, ein Kohlenstoffträger zur Verfügung gestellt wird, erfüllt der Kohlenstoff des Kohlenstoffträgers neben seiner Funktion, eine reduzierende Atmosphäre beim Brand herzustellen, gleichzeitig noch die weitere Funktion, während des Brandes als Reaktant für das Zirkoniumdioxid zur Verfügung zu stehen, um zusammen mit dem Zirkonium des Zirkoniumdioxids sowie mit Stickstoff Zirkoniumcarbonitrid zu bilden.

Um den für die Bildung von Zirkoniumcarbonitrid benötigten Stickstoff zur Verfügung zu stellen, ist ferner ein Stickstoffträger zur Verfügung zu stellen. Insoweit kann erfindungsgemäß vorgesehen sein, während des Brandes einen Stickstoffträger zur Verfügung zu stellen, insbesondere einen festen Stickstoffträger, insbesondere in körniger Form, beispielsweise wenigstens ein Nitrid, insbesondere beispielsweise in Form wenigstens eines der Nitride Aluminiumnitrid (AlN) oder Siliziumnitrid (Si₃N₄).

Der reduzierende Brand wird bevorzugt bei Temperaturen in einem Temperaturbereich ausgeführt, bei denen das Zirkoniumdioxid zumindest teilweise in seine kubische Modifikation überführt wird, also bevorzugt bei Temperaturen oberhalb von 1.173° C. Insbesondere wird der Brand bei Temperaturen von wenigstens 1.250°C durchgeführt, also beispielsweise bei wenigstens 1.280°C, 1.300°C, 1.350°C, 1.400°C, 1.450°C oder 1.500°C. Ferner wird der Brand bevorzugt bei Temperaturen von höchstens 1.800°C durchgeführt, also beispielsweise auch bei Temperaturen von höchstens 1.750°C, 1.700°C, 1.650°C, 1.600°C oder 1.580°C. Besonders bevorzugt wird der Brand bei einer Temperatur im Bereich von 1.280°C bis 1.580°C durchgeführt. Ab einer Brenndauer von etwa 12 Stunden reagiert das Zirkoniumdioxid zunehmend mit Kohlenstoff und Stickstoff zu Zirkoniumcarbonitrid. Insoweit ist bevorzugt vorgesehen, den Brand für eine Dauer von über 12 Stunden durchzuführen. Da der Anteil an Zirkoniumcarbonitrid mit zunehmender Brenndauer zunimmt, kann der Brand auch für eine Dauer von wenigstens 16, 20, 24 oder 48 Stunden durchführt werden. Da ab einer Brenndauer von mehr als 24 Stunden die Bildung von Zirkoniumcarbonitrid wieder abnehmen kann, da das Zirkoniumdioxid bereits vollständig oder weitgehend zu Zirkoniumcarbonitrid reagiert hat, kann vorgesehen sein, dass die Brenndauer höchstens 48, 36 oder 24 Stunden beträgt.

Soweit als Ausgangsstoff zur Herstellung der Körner ein voll- oder teilstabilisiertes Zirkoniumdioxid nach dem Stand der Technik zur Verfügung gestellt wird und gleichzeitig vorgesehen ist, dass das Korn neben Zirkoniumcarbonitrid auch Anteile an Zirkoniumdioxid aufweist, kann vorgesehen sein, dass während des Brandes ein oder mehrere Reaktanten für die Stabilisierungszusätze zur Verfügung gestellt werden. Diese Reaktanten können insbesondere derart zur Verfügung gestellt werden, dass sie während des Brandes gasförmig vorliegen.

Entsprechende, insbesondere gasförmige Reaktanten bilden während des reduzierenden Brandes des Zirkoniumdioxids Verbindungen mit den Stabilsierungszusätzen des Zirkoniumdioxids, wodurch die Stabilisierungszusätze zumindest teilweise, bevorzugt überwiegend aus dem Zirkoniumdioxid entfernt werden. Nach Abkühlen des Zirkoniumdioxids ist der Anteil der Stabilisierungszusätze in dem Zirkoniumdioxid hierdurch gegenüber dem Anteil an Stabilisierungszusätzen vor dem Brand reduziert, so dass diese entfernten Stabilisierungszusätze die Korrosionsbeständigkeit des Zirkoniumdioxids nicht weiter negativ beeinflussen. Gleichzeitig bleibt die kubische Hochtemperaturmodifikation des Zirkoniumdioxids, trotz der zumindest teilweisen Entfernung der Stabilisierungszusätze, auch bei Raumtemperatur metastabil erhalten. Insgesamt erhält man durch dieses Verfahrensmerkmal demnach ein Korn mit Anteilen an Zirkoniumcarbonitrid und Zirkoniumdioxid, wobei das Zirkoniumdioxid trotz des geringen Anteils an Stabilisierungszusätzen bei Raumtemperatur eine metastabile Mineralphase in kubischer Modifikation ausbildet.

Bei dem gasförmigen Reaktanten, der während des reduzierenden Brandes des Zirkoniumdioxids mit den Stabilisierungszusätzen reagiert, kann es sich grundsätzlich um einen beliebigen Stoff oder eine Mischung von Stoffen handeln, die während des Brandes in Gasform in der Ofenatmosphäre vorliegen und mit wenigstens einem, bevorzugt jedoch sämtlichen Stabilisierungszusätzen eine Reaktion eingehen, also insbesondere mit Stabilisierungszusätzen in Form wenigstens eines der folgenden Stoffe: CaO, MgO, Y₂O₃ oder Oxide seltener Erden.

Nach einer besonders bevorzugten Ausführungsform liegt ein gasförmiger Reaktant in Form von Silizium und/oder Aluminium umfassendem Gas vor. Um ein solch silizium- und/oder aluminiumhaltiges Gas während des reduzierenden Brandes des Zirkoniumdioxids zur Verfügung zu stellen, kann metallisches Silizium und/oder Aluminium vorgesehen sein, das während des reduzierenden Brandes silizium- und/oder aluminiumhaltiges Gas bildet. Das Silizium des siliziumhaltigen Gases beziehungsweise das Aluminium des aluminiumhaltigen Gases reagiert während des Brandes insbesondere mit Stabilisierungszusätzen in Form von Calciumoxid, Magnesiumoxid oder Yttriumoxid, so dass diese Stabilisierungszusätze zumindest teilweise aus dem Zirkoniumdioxid entfernt werden.

Alternativ oder kumulativ kann ein gasförmiger Reaktant beispielsweise in Form von Kohlenmonoxid vorliegen, der sich während des Brandes aus dem Kohlenstoffträger bilden kann. Insofern kann ein gasförmiger Reaktant beispielsweise in Form wenigstens einer der gasförmigen Stoffe Silizium, Aluminium oder Kohlenmonoxid vorliegen.

Soweit während des Brandes entsprechend gasförmige Reaktanten vorliegen, kann auch vorgesehen sein, dass der reduzierende Brand bei Temperaturen oberhalb von 2.370° C durchgeführt wird, so dass das Zirkoniumdioxid vollständig in seine kubische Modifikation übergeführt ist. In letzterem Fall kann das Zirkoniumdioxid nach dem Abkühlen weitgehend oder vollständig in einer bei Raumtemperatur (meta-)stabilen kubischen Modifikation vorliegen. Der Brand wird jedoch in jedem Fall bei Temperaturen unterhalb der Schmelztemperatur von Zirkoniumdioxid durchgeführt, also unterhalb von 2.690° C.

Das als Ausgangsstoff zur Verfügung gestellte Zirkoniumdioxid kann für den Brand zur Herstellung des Korns mit den weiteren, wie vorstehend ausgeführten Komponenten gemeinsam dem reduzierenden Brand unterworfen werden. Bevorzugt wird das als Ausgangsstoff zur Verfügung gestellte Zirkoniumdioxid vor dem Brand mit den weiteren Komponenten gemischt und als entsprechende Mischung dem Brand unterworfen. In einer solchen Mischung kann das als Ausgangsstoff zur Verfügung gestellt Zirkoniumdioxid beispielsweise in einem Massenanteil, bezogen auf die Gesamtmasse der Mischung, im Bereich von 20 bis 99 Masse-% vorliegen, also beispielsweise in einem Massenanteil von wenigstens 20, 25, 30, 35, 40 oder 45 Masse-% und beispielsweise in einem Massenanteil von höchstens 98, 95, 90, 85, 80, 75, 70, 65, 60 oder 55 Masse-%. Ein oder mehrere Kohlenstoffträger können in der Mischung beispielsweise in einem Gesamtmassenanteil, bezogen auf die Gesamtmasse der Mischung, im Bereich von 1 bis 80 Masse-% vorliegen, also beispielsweise in einem Massenanteil von wenigstens 1, 5, 10, 15 oder 20 Masse-% und beispielsweise in einem Massenanteil von höchstens 80, 70, 60, 50, 45, 40, 35 oder 30 Masse-%.

Soweit Silizium und/oder Aluminium als Reaktanten für Stabilisierungszusätze in der Mischung vorliegen, können diese beispielsweise in einem Gesamtmassenanteil, bezogen auf die Gesamtmasse der Mischung, im Bereich von 1 bis 40 Masse-% vorliegen, also beispielsweise in einem Massenanteil von wenigstens 1, 5, 10, 15 oder 20 Masse-% und beispielsweise in einem Massenanteil von höchstens 40, 35 oder 30 Masse-%. Soweit ein Stickstoffträger zur Verfügung gestellt wird, beispielsweise wenigstens ein Nitrid, insbesondere beispielsweise Aluminiumnitrid und/oder Siliziumnitrid, kann dieser in der Mischung beispielsweise in einem Massenanteil, bezogen auf die Gesamtmasse der Mischung, im Bereich von 1 bis 20 Masse-% vorliegen, also beispielsweise in einem Massenanteil von wenigstens 1, 2, 5 oder 8 Masse % und beispielsweise in einem Massenanteil von höchstens 20, 15 oder 10 Masse-%.

Die Mischung kann durch Binder, insbesondere organische Grünbinder, die sich beim Brand verflüchtigen, gebunden sein. Beispielsweise kann ein Grünbinder in Form von Dextrin verwendet werden.

Gegenstand der Erfindung ist auch ein Verfahren zur Herstellung eines Korns auf Basis Zirkoniumdioxid, das die folgenden Schritte umfasst:
- zur Verfügungstellung von Zirkoniumdioxid;
- Brennen des Zirkoniumdioxids in reduzierender Atmosphäre unter Anwesenheit von wenigstens einem der folgenden Stoffe: Kohlenstoff und Stickstoff;
- Abkühlen des Zirkoniumdioxids.

Im Übrigen kann das Verfahren die hierin beschriebenen Schritte umfassen.

Gegenstand der Erfindung ist ferner ein feuerfestes Erzeugnis, welches wenigstens ein Korn umfasst. Gegenstand der Erfindung ist ferner ein feuerfestes Erzeugnis, welches Körner umfasst.

Bei dem erfindungsgemäßen feuerfesten Erzeugnis kann es sich insbesondere um ein geformtes Erzeugnis handeln, insbesondere ein Verschleißteil, besonders bevorzugt um ein Verschleißteil beim Stahlstrangguss, beispielsweise einen Monoblockstopfen, eine Düse, ein Tauchrohr oder ein Eintauchausguss.

In einem solchen Erzeugnis beziehungsweise Verschleißteil kann das Korn insbesondere in den Bereichen vorliegen, in denen das Erzeugnis in Kontakt mit der Schlacke tritt, beispielsweise im Schlackenbereich eines Monoblockstopfens, oder an denen das Erzeugnis in Kontakt mit der Stahlschmelze mit einer hohen Strömungsgeschwindigkeit tritt, wie beispielsweise im Eintauchbereich des Pfannenverteilerrohres, am Durchlass einer Schieberplatte, an der Stopfennase sowie im Einlauf- und Eintauchbereichs des Eintauchausgusses. Insoweit kann es sich bei dem erfindungsgemäßen Erzeugnis beispielsweise um ein Pfannenverteilerrohr, eine Schieberplatte, einen Monoblockstopfen, eine Düse oder einen Eintauchausguss handeln. Beispielsweise kann das Korn im Bereich des Schlackenbandes eines Stopfens verwendet werden.

Bei dem erfindungsgemäßen Erzeugnis kann es sich insbesondere um ein Erzeugnis handeln, das durch isostatisches Pressen geformt worden ist.

In dem erfindungsgemäßen Erzeugnis kann das Korn beispielsweise in einer Kohlenstoffmatrix vorliegen. Die Kohlenstoffmatrix kann insbesondere in Form von Graphit vorliegen.

Grundsätzlich kann es sich bei dem erfindungsgemäßen Erzeugnis jedoch um ein beliebiges feuerfestes Erzeugnis handeln, also beispielsweise auch um ein feuerfestes keramisches Erzeugnis, also ein gesintertes feuerfestes Erzeugnis in Form miteinander versinterter Körner. Insoweit können Körner im erfindungsgemäßen Erzeugnis beispielsweise in Form versinterter Körner vorliegen.

Ferner ist Gegenstand der Erfindung ein Verfahren zur Herstellung eines feuerfesten Erzeugnisses, umfassend die folgenden Schritte:
- Zur Verfügungstellung von Körnern;
- Zusammenfügen der Körner mit weiteren feuerfesten Rohstoffen;
- Pressen eines Formkörpers aus den Körnern und den weiteren feuerfesten Rohstoffen;
- Brennen des Formkörpers zu einem feuerfesten Erzeugnis.

Bei dem erfindungsgemäßen Verfahren wird somit zunächst ein feuerfester Rohstoff zur Verfügung gestellt, der aus Körnern besteht oder diese zumindest umfasst. Dieser Rohstoff kann ausschließlich mit einem oder mehreren weiteren feuerfesten Rohstoffen zusammengefügt werden, beispielsweise mit feuerfesten Rohstoffen auf Basis wenigstens eines der folgenden Stoffe: Al₂O₃, MgO, SiO₂, Cr₂O₃ oder Kohlenstoff.

Die Rohstoffe werden anschließend zu einem Formkörper gepresst, also einem sogenannten Grünkörper, insbesondere beispielsweise durch isostatisches Pressen.

Der Grünkörper kann anschließend einem Brand unterworfen werden, woraufhin man nach Abkühlen ein feuerfestes Erzeugnis erhält.

Im Übrigen kann ein erfindungsgemäßes feuerfestes Erzeugnis gemäß den aus dem Stand der Technik bekannten Verfahrensschritten hergestellt werden.

Gegenstand der Erfindung ist ferner ein feuerfestes Erzeugnis, das durch ein erfindungsgemäßes Verfahren hergestellt wurde.

Weitere Merkmale der Erfindung ergeben sich aus den Ansprüchen, den beigefügten Figuren und zugehörigen Erläuterungen sowie dem Ausführungsbeispiel.

Sämtliche der hierin offenbarten Merkmale der Erfindung können, einzeln oder in Kombination, beliebig miteinander kombiniert sein.

Ein Ausführungsbeispiel des erfindungsgemäßen Verfahrens zur Herstellung des erfindungsgemäßen Korns sowie eines danach hergestellten Korns werden nachfolgend näher erläutert.

Als Ausgangsmaterial für die Durchführung des erfindungsgemäßen Verfahrens wurde zunächst kubisches Zirkoniumdioxid, das durch einen Anteil an Calciumoxid von etwa 4-5 Masse-% (entsprechend einem Anteil an Calcium von etwa 2,8-3,6 Masse-%) teilstabilisiert war, als körniges Gut mit einer mittleren Korngröße im Bereich von > 0 mm bis < 0,7 mm zur Verfügung gestellt.

Als weiteres Ausgangsmaterial wurde zur Verfügung gestellt ein Kohlenstoffträger in Form von Ruß mit einem Kohlenstoffanteil von etwa 96 Masse-%, bezogen auf die Gesamtmasse des Kohlenstoffträgers, das in Pulverform vorlag.

Ferner wurde als Ausgangsmaterial ein Stickstoffträger in Form von Aluminiumnitrid in körniger Form zur Verfügung gestellt.

Ein weiteres Ausgangsmaterial bildeten metallisches Silizium- und Aluminiumpulver.

Diese Ausgangsmaterialien wurden zusammen mit einem Grünbinder in Form von Dextrin zu einer Mischung gemischt. In der Mischung waren die Massenanteile der Ausgangsmaterialien, jeweils bezogen auf die Gesamtmasse der Mischung, wie folgt: Zirkoniumdioxid: 48 Masse-%; Ruß: 24 Masse-%; Aluminiumnitrid: 6 Masse-%; Siliziumpulver: 11 Masse-%; Aluminiumpulver: 11 Masse-%. Der Massenanteil an Dextrin, bezogen auf die Mischung ohne das Dextrin, betrug 2,5 Masse-%.

Die entsprechend zur Verfügung gestellte Mischung wurde anschließend auf zwei unterschiedliche Arten weiter behandelt.

Zum einen wurde die Mischung in einem geschlossenen Ofenraum bei einer Temperatur von etwa 1.550°C für etwa 12 Stunden gebrannt. Die entsprechend gebrannte Mischung wird nachfolgend als "Probe 1" bezeichnet.

Zum andere wurde die Mischung in einem geschlossenen Ofenraum bei einer Temperatur von etwa 1.300°C für etwa 24 Stunden gebrannt. Die entsprechend gebrannte Mischung wird nachfolgend als "Probe 2" bezeichnet.

Während des Brandes der Proben 1 und 2 erzeugte der Ruß eine reduzierende Atmosphäre, so dass der Sauerstoffpartialdruck im Ofenraum etwa 10⁻⁷ Pa betrug. Ferner reagierten Kohlenstoffanteile des Rußes und Stickstoffanteile des Aluminiumnitrids während des Brandes mit Anteilen an Zirkonium des Zirkoniumdioxids zu Zirkoniumcarbonitrid. Schließlich wurde aus dem pulverförmigen, metallischen Silizium und Aluminium während des Brandes silizium- und aluminiumreiches Gas gebildet, das mit Anteilen des Calciumoxids des teilstabilisierten Zirkoniumdioxids reagierte. Der Anteil an Calcium im stabilisierten Zirkoniumdioxid wurde hierdurch während des Brandes bei den Proben 1 und 2 auf einen Anteil von durchschnittlich unter 0,8 Masse-% reduziert.

Nach Durchführung des Brandes der Proben 1 und 2 wurde das Zirkoniumdioxid auf Raumtemperatur abgekühlt, woraufhin erfindungsgemäße Körner erhalten wurden. Während des Brandes wurde das im kubischen Zirkoniumdioxid enthaltende Calciumoxid entfernt; dennoch blieb das kubische Zirkoniumdioxid auch nach weitgehendem Entfernen des Calciumoxids bei Raumtemperatur metastabil erhalten. Das während des Brandes gebildete Zirkoniumcarbonitrid war vorwiegend im Randbereich der Körner konzentriert.

Als Figuren sind zwei Aufnahmen auf Schliffbilder der wie vorstehend hergestellten Körner gemäß den Proben 1 und 2 beigefügt. Dabei zeigt
- Figur 1: eine auflichtmikroskopische Aufnahme auf ein Schliffbild von Probe 1,
- Figur 2: einen Ausschnitt des Schliffbildes gemäß Figur 1 in einer rasterelektronenmikroskopischen Aufnahme,
- Figur 3: eine auflichtmikroskopische Aufnahme auf ein Schliffbild von Probe 2 und

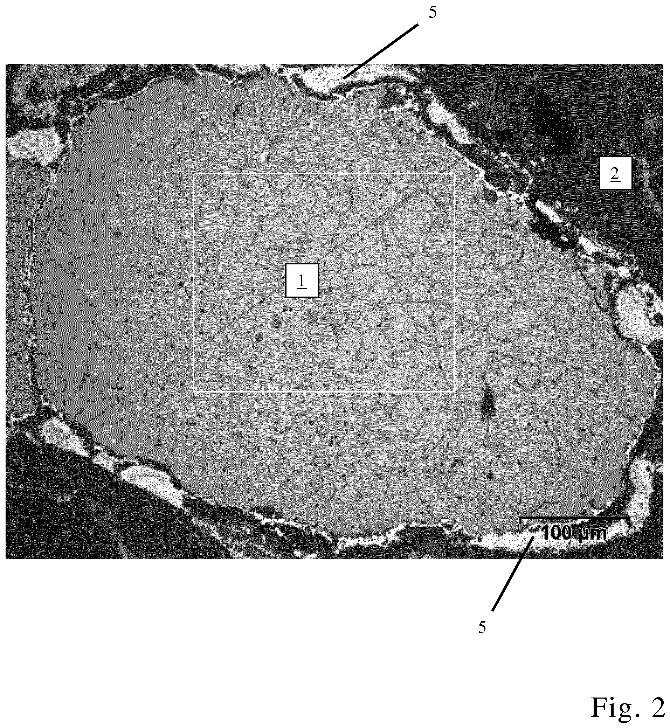

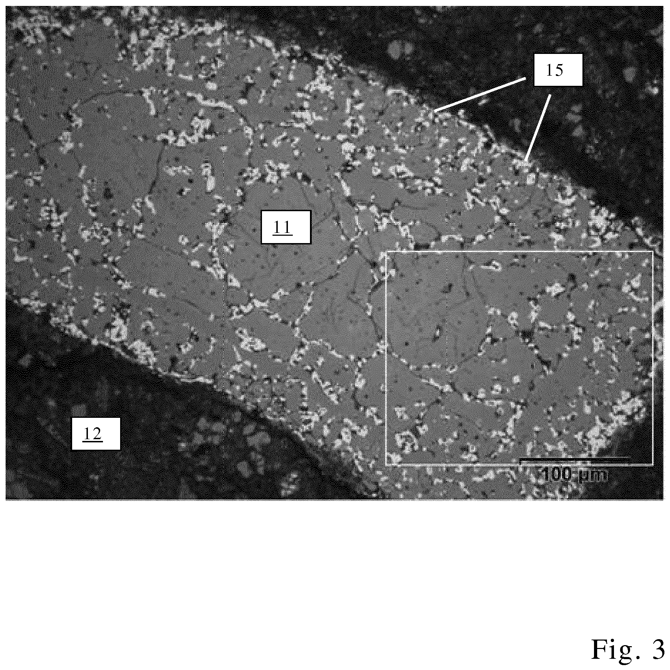

- Figur 2: einen Ausschnitt des Schliffbildes gemäß Figur 3 in einer rasterelektronenmikroskopischen Aufnahme

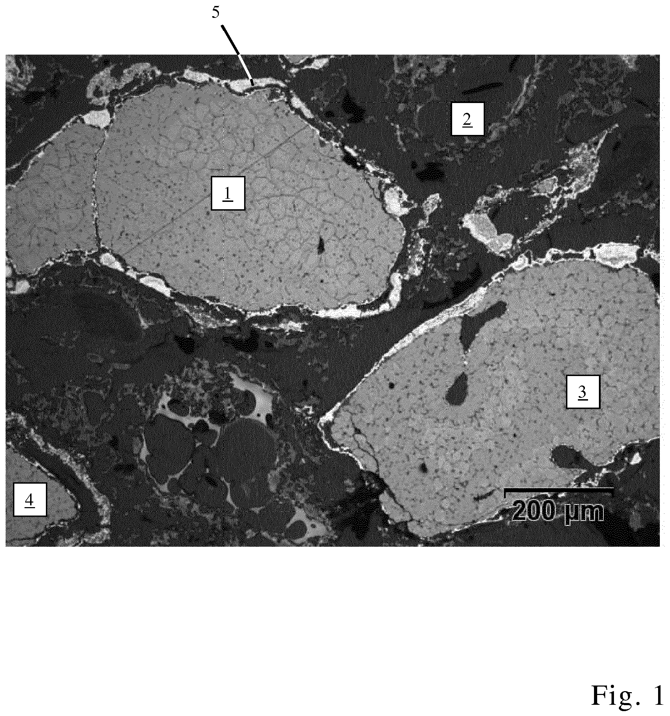

Der schwarze Balken rechts unten in Figur 1 entspricht einer Länge von 200 µm. Zur erkennen ist in Figur 1 ein mit dem Bezugszeichen 1 gekennzeichnetes, Korn, das eine Größe von etwa 520 x 380 µm aufweist. Das Korn 1 ist eingebettet in eine Kohlenstoffmatrix 2, die sich während des Brandes aus dem Ruß gebildet hat.

Weitere Körner, die sich während des Brandes gebildet haben, sind mit den Bezugszeichen 3 und 4 gekennzeichnet.

Die mittlere elementare Zusammensetzung des Korns 1 ist etwa wie folgt, wobei der Massenanteil des jeweiligen Elementes in Bezug auf die Gesamtmasse des Korns 1 angegeben ist:

| | |
|---|---|
| Zirkonium: | ca. 65,0 % |
| Sauerstoff: | ca. 18,0 %; |
| Stickstoff: | ca. 6,0 % |
| Kohlenstoff: | ca. 7,0 %; |
| Calcium: | ca. 2,5 % |
| Magnesium: | 0 %; |
| Yttrium: | 0 %; |
| Eisen: | < 0,5 %; |
| Aluminium: | < 0,5 %. |

Dabei sind die Massenanteile der jeweiligen Elemente jedoch nicht gleichmäßig über das Volumen des Korns 1 verteilt. Vielmehr ist Zirkoniumcarbonitrid im Randbereich des Korns 1 konzentriert. Diese Konzentration von Zirkoniumcarbonitrid im Randbereich des Korns 1 spiegelt sich unter anderem in der Konzentration des Elements Kohlenstoff wieder, die im Randbereich des Korns 1 signifikant höher ist als im Inneren des Korns 1.

Optisch spiegelt sich diese Konzentration von Zirkoniumcarbonitrid im Randbereich des Korns 1 in den Figuren 1 und 2 in einem dünnen Saum 5 wieder, der das Korn 1 randseitig vollständig umschließt.

Der Anteil an Zirkoniumcarbonitrid in Korn 1 beträgt etwa 5 Masse-% und der Anteil an kubischem Zirkoniumdioxid etwa 90 Masse-%, jeweils bezogen auf die Gesamtmasse des Korns 1. Der restliche Phasenanteil des Korns 1 ist im Wesentlichen aus Schmelzphasen auf Basis der Oxide CaO, SiO₂ und ZrO₂ gebildet.

Der schwarze Balken rechts unten in Figur 3 entspricht einer Länge von 100 µm. Zur erkennen ist in Figur 3 ein mit dem Bezugszeichen 11 gekennzeichnetes, Korn, das eine Größe von etwa 700 x 325 µm aufweist. Das Korn 11 ist eingebettet in eine Kohlenstoffmatrix 12, die sich während des Brandes aus dem Ruß gebildet hat.

Die mittlere elementare Zusammensetzung des Korns 11 ist etwa wie folgt, wobei der Massenanteil des jeweiligen Elementes in Bezug auf die Gesamtmasse des Korns 11 angegeben ist:

| | |
|---|---|
| Zirkonium: | ca. 64,0 % |
| Sauerstoff: | ca. 17,0 %; |
| Stickstoff: | ca. 8,0 % |
| Kohlenstoff: | ca. 9,0 %; |
| Calcium: | ca. 1,0 % |
| Magnesium: | 0 %; |
| Yttrium: | 0 %; |
| Eisen: | < 0,5 %; |
| Aluminium: | < 0,5 %. |

Dabei sind die Massenanteile der jeweiligen Elemente jedoch nicht gleichmäßig über das Volumen des Korns 11 verteilt. Vielmehr ist Zirkoniumcarbonitrid im Randbereich des Korns 11 konzentriert. Diese Konzentration von Zirkoniumcarbonitrid im Randbereich des Korns 11 spiegelt sich unter anderem in der Konzentration des Elements Kohlenstoff wieder, die im Randbereich des Korns 11 signifikant höher ist als im Inneren des Korns 11.

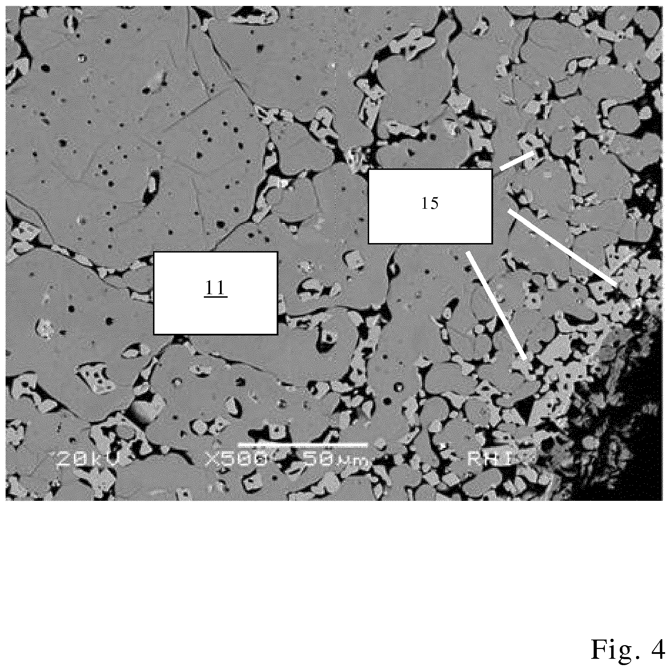

Optisch spiegelt sich diese Konzentration von Zirkoniumcarbonitrid im Randbereich des Korns 11 in den Figuren 3 und 4 in einem dünnen Saum 15 wieder, der das Korn 11 randseitig vollständig umschließt.

Der Anteil an Zirkoniumcarbonitrid in Korn 11 beträgt etwa 23 Masse-% und der Anteil an kubischem Zirkoniumdioxid etwa 72 Masse-%, jeweils bezogen auf die Gesamtmasse des Korns 11. Der restliche Phasenanteil des Korns 11 ist im Wesentlichen aus Schmelzphasen auf Basis der Oxide CaO, SiO₂ und ZrO₂ gebildet.

## Patentansprüche

1. Verwendung eines Zirkoniumcarbonitrid umfassenden Korns zur Herstellung eines feuerfesten Erzeugnisses.

2. Verwendung nach Anspruch 1, wobei Zirkoniumcarbonitrid im Randbereich des Korns konzentriert ist.

3. Verwendung nach wenigstens einem der vorhergehenden Ansprüche wobei das Korn einen Anteil an Zirkoniumcarbonitrid im Bereich von 1 bis 99 Masse-% aufweist.

4. Verwendung nach wenigstens einem der vorhergehenden Ansprüche, wobei das Korn Zirkoniumdioxid umfasst.

5. Verwendung nach Anspruch 4, bei dem das Zirkoniumdioxid in kubischer Modifikation vorliegt.

6. Verwendung nach Anspruch 4, bei dem das Zirkoniumdioxid in Form einer bei Raumtemperatur metastabilen Mineralphase in kubischer Modifikation vorliegt.

7. Verwendung nach wenigstens einem der vorhergehenden Ansprüche, wobei das Korn einen Anteil an Zirkoniumdioxid im Bereich von 1 bis 99 Masse-% aufweist.

8. Verwendung nach wenigstens einem der vorhergehenden Ansprüche wobei das Korn die folgenden Elemente in den folgenden Massenanteilen umfasst:
| | |
|---|---|
| Zirkonium: | 5 - 97 %; |
| Sauerstoff: | 1 - 50 %; |
| Stickstoff: | 1 - 30 %; |
| Kohlenstoff: | 1 - 30 %; |
| Hafnium: | 0 - 4 %; |
| Calcium: | 0 - 8 %; |
| Magnesium: | 0 - 8 %; |
| Yttrium: | 0 - 8 %; |
| Eisen: | 0 - 2 %; |
| Aluminium: | 0 - 2 %; |
| Silizium: | 0 - 2 %. |

9. Feuerfestes Erzeugnis, welches Körner gemäß wenigstens einem der vorhergehenden Ansprüche umfasst.

10. Erzeugnis nach Anspruch 9 in Form eines Verschleißteils beim Stahlstrangguss.

11. Erzeugnis nach Anspruch 10 in Form einer Schieberplatte, eines Monoblockstopfens, einer Düse eines Tauchrohres oder eines Eintauchausgusses.

12. Verwendung von Körnern nach wenigstens einem der Ansprüche 1 bis 8 als Rohstoff für die Herstellung von feuerfesten Erzeugnissen.

13. Verfahren zur Herstellung eines feuerfesten Erzeugnisses, umfassend die folgenden Schritte:
13.1 zur Verfügungstellung von Körnern gemäss wenigstens einem der Ansprüche 1 bis 8;
13.2 Zusammenfügen der I Körner mit weiteren feuerfesten Rohstoffen;
13.3 Pressen eines Formkörpers aus den Körnern und den weiteren feuerfesten Rohstoffen;
13.4 Brennen des Formkörpers zu einem feuerfesten Erzeugnis.

14. Feuerfestes Erzeugnis, das durch ein Verfahren nach Anspruch 13 hergestellt ist.

## Claims

1. Use of a grain, comprising zirconium carbonitride, for the production of a refractory product.

2. Use as claimed in claim 1, wherein zirconium carbonitride is concentrated in the edge region of the grain.

3. Use as claimed in at least one of the preceding claims, wherein the grain has a proportion of zirconium carbonitride in the range from 1% to 99% by mass.

4. Use as claimed in at least one of the preceding claims, wherein the grain comprises zirconium dioxide.

5. Use as claimed in claim 4, wherein the zirconium dioxide is present in the cubic modification.

6. Use as claimed in claim 4, wherein the zirconium dioxide is present in the form of a mineral phase in cubic modification being metastable at room temperature.

7. Use as claimed in at least one of the preceding claims, wherein the grain has a proportion of zirconium dioxide in the range from 1% to 99% by mass.

8. Use as claimed in at least one of the preceding claims, wherein the grain comprises the following elements in the following proportions by mass:
| | |
|---|---|
| zirconium: | 5-97%; |
| oxygen: | 1-50%; |
| nitrogen: | 1-30%; |
| carbon: | 1-30%; |
| hafnium: | 0-4%; |
| calcium: | 0-8%; |
| magnesium: | 0-8%; |
| yttrium: | 0-8%; |
| iron: | 0-2%; |
| aluminum: | 0-2%; |
| silicon: | 0-2%. |

9. A refractory product comprising grains according to at least one of the preceding claims.

10. The product as claimed in claim 9 in the form of a wearing part in continuous steel casting.

11. The product as claimed in claim 10 in the form of a slide plate, a monoblock stopper, a nozzle, an immersed tube or a submerged entry nozzle.

12. The use of grains according to at least one of claims 1 to 8 as raw material for the production of refractory products.

13. A process for producing a refractory product, comprising the following steps:
13.1 providing grains according ot at least one of claims 1 to 8;
13.2 combining the grains with further refractory raw materials;
13.3 pressing a shaped body from the grains and the further refractory raw materials;
13.4 firing the shaped body to give a refractory product.

14. A refractory product produced by a process as claimed in claim 13.

## Revendications

1. Utilisation d'un grain comprenant du carbonitrure de zirconium pour la fabrication d'un produit réfractaire.

2. Utilisation selon la revendication 1, du carbonitrure de zirconium étant concentré dans la zone de bordure du grain.

3. Utilisation selon au moins l'une quelconque des revendications précédentes,
le grain comportant une part de carbonitrure de zirconium de l'ordre de 1 à 99 % en masse.

4. Utilisation selon au moins l'une quelconque des revendications précédentes,
le grain comprenant du dioxyde de zirconium.

5. Utilisation selon la revendication 4, lors de laquelle le dioxyde de zirconium se présente en modification cubique.

6. Utilisation selon la revendication 4, lors de laquelle le dioxyde de zirconium se présente sous la forme d'une phase minérale métastable à température ambiante en modification cubique.

7. Utilisation selon au moins l'une quelconque des revendications précédentes,
le grain comportant une part de dioxyde de zirconium de l'ordre de 1 à 99 % en masse.

8. Utilisation selon au moins l'une quelconque des revendications précédentes,
le grain comprenant les éléments suivants dans les pourcentages en masse suivants :
| | |
|---|---|
| Zirconium : | 5 à 97 % ; |
| Oxygène : | 1 à 50 % ; |
| Azote : | 1 à 30 % ; |
| Carbone : | 1 à 30 % ; |
| Hafnium : | 0 à 4 % ; |
| Calcium : | 0 à 8 % ; |
| Magnésium : | 0 à 8 % ; |
| Yttrium : | 0 à 8 % ; |
| Fer : | 0 à 2 % ; |
| Aluminium : | 0 à 2 % ; |
| Silicium | 0 à 2 %. |

9. Produit réfractaire, lequel comprend des grains selon au moins l'une quelconque des revendications précédentes.

10. Produit selon la revendication 9 sous la forme d'une pièce d'usure lors d'une coulée continue de l'acier.

11. Produit selon la revendication 10, sous la forme d'une plaque coulissante, d'une quenouille monobloc, d'une tuyère d'un tube plongeur ou d'une tuyère d'immersion.

12. Utilisation de grains selon au moins l'une quelconque des revendications 1 à 8 en tant que matière première pour la fabrication de produits réfractaires.

13. Procédé de fabrication d'un produit réfractaire, comprenant les étapes suivantes, consistant à :
13.1 mettre à disposition des grains selon au moins l'une quelconque des revendications 1 à 8 ;
13.2 assembler les grains avec d'autres matières premières réfractaires ;
13.3 presser un corps moulé à partir des grains et des autres matières premières réfractaires ;
13.4 faire cuire le corps moulé en un produit réfractaire.

14. Produit réfractaire, qui est fabriqué d'après un procédé selon la revendication 13.
